# EUROPÄISCHE PATENTSCHRIFT

(11) **EP 3 371 008 B1**
(45) Veröffentlichungstag und Bekanntmachung des Hinweises auf die Patenterteilung: **01.01.2020**
(21) Anmeldenummer: 16793821.6
(22) Anmeldetag: 04.11.2016
(51) Int. Cl.: B60R 13/10, G02B 5/128

(54) **RETROREFLEKTIERENDER KÖRPER MIT FARBEFFEKT UND HERSTELLUNGSVERFAHREN**
RETROREFLECTIVE BODY WITH COLOR EFFECT AND PRODUCTION METHOD
CORPS RÉTRORÉFLÉCHISSANT À EFFET DE COULEUR ET PROCÉDÉ DE FABRICATION

(30) Priorität: 05.11.2015 DE 102015118966
(43) Veröffentlichungstag der Anmeldung: 12.09.2018
(73) Patentinhaber: Erich Utsch AG, 57080 Siegen (DE)
(72) Erfinder: PFUNDSTEIN, Bernd, 35630 Ehringhausen (DE)
(74) Vertreter: Patentanwälte Bauer Vorberg Kayser
(86) Internationale Anmeldenummer: PCT/EP2016/076673
(87) Internationale Veröffentlichungsnummer: WO 2017/077033

(56) Entgegenhaltungen:
- EP-A2- 0 704 719
- WO-A1-2014/209607
- US-A- 2 713 286
- US-A- 3 190 178
- US-A- 3 310 900
- US-A- 4 123 140

## Beschreibung

Die Erfindung betrifft einen retroreflektierenden Körper, ein Verfahren zur Herstellung eines retroreflektierenden Körpers, eine Verwendung eines retroreflektierenden Körpers als KFZ-Kennzeichenschild und/oder Verkehrsschild sowie ein Verfahren zur Herstellung eines KFZ-Kennzeichenschildes und/oder eines Verkehrsschildes.

Aus dem Stand der Technik sind KFZ-Kennzeichenschilder mit einer Platine, auf die vorderseitig eine retroreflektierende Folie auflaminiert ist, seit langem bekannt. Die Verwendung retroreflektierender Folien für KFZ-Kennzeichenschilder bzw. Hinweisschilder ist in einer Vielzahl von Staaten durch ihre jeweiligen nationalen Zulassungsvorschriften vorgeschrieben. Retroreflektierende Kennzeichenschilder oder Hinweisschilder weisen aufgrund ihrer Retroreflektivität eine hohe Erkennbarkeit unter retroreflektierenden Bedingung auf.

Vorschriften zu retroreflektierenden Materialien zur Verkehrssicherung und lichttechnischen Anforderungen für Reflexstoffe sind beispielsweise in der DIN 67520 hinterlegt. Dort werden retroreflektierende Materialien nach der Leuchtdichte klassifiziert, die ein Verkehrsteilnehmer von einem betrachteten Verkehrszeichen wahrnimmt. Die Konstruktion der betrachteten retroreflektierenden Strukturen ist dabei unerheblich. Die Reflexions-Klassen (RA-Klassen) beschreiben die Mindestanforderungen an ein Material hinsichtlich eines spezifischen Rückstrahlwertes.

Die Anforderungen an Reflexstoffe für KFZ-Kennzeichenschilder und Verkehrszeichen sind in den letzten Jahren gestiegen. Des Weiteren ist davon auszugehen, dass diese Anforderungen in kommender Zeit weiter steigen werden. Dabei spielt die nachlassende Sehleistung einer steigenden Anzahl von älteren Autofahrern eine Rolle, die Notwendigkeit, dass Verkehrszeichen in der erhöhten städtischen Umgebungshelligkeit wahrgenommen werden müssen und die zunehmende Überkopf-Beschilderung, die durch den gebündelten Lichtstrahl der modernen Fahrzeugscheinwerfer kaum noch erreicht werden kann. Dies sind nur einige Beispiele welche aufzeigen sollen, dass die Anforderung an Reflexionsfolien, welche in Zukunft eingesetzt werden, einen hohen Bedarf an einer leistungsfähigen retroreflektierenden Schicht haben, sowie einen Bedarf an großen Einsatzgebieten.

Reflexfolien werden aufgrund ihrer lichttechnischen Eigenschaften in verschiedene Reflexions-Klassen eingeteilt. Diese sind charakteristisch für die Anforderungen an den spezifischen Rückstrahlwert (RA), der maßgebend für die Wahl der Reflexfolie ist. Gemäß den unterschiedlichen Konstruktionen wird der Reflexfolienaufbau nach verschiedenen Typen unterschieden.

Einige Reflexfolientypen umfassen dabei eine Basis Reflexschicht und Glaskugeln. Zwischen der Reflexschicht und den Glaskugeln ist dabei eine transparente Zwischenschicht vorgesehen, sodass die Kugeln als dicke Linse wirken und ein auf die Kugel auftreffender Lichtstrahl so gebrochen wird, dass dessen Brennpunkt kurz hinter der Kugel im Wesentlichen auf der Reflexschicht liegt. Damit wird Licht in etwa zur Lichtquelle zurückreflektiert.

Andere Reflexfolientypen stellen eine stärker retroreflektierende Folie auf Basis von eingekapselten Glaskugeln dar. Dabei liegt eine Reflexionsschicht in einem Bereich direkt an den Glaskugeln an.

Wiederum andere Reflexfolientypen weisen eine Reflexionsschicht innerhalb der Folie auf Basis einer Mikroprismentechnologie auf. Bei diesen Folien wird eine Schicht mit einer prismatischen Struktur auf eine Trägerschicht aufgebracht, welche zur reflektierenden Seite hin weiterhin mit einer Deckschicht überzogen wird.

Aus dem Stand der Technik ist weiterhin bekannt, dass in Fahrbahnmarkierungen feinste Glasperlen in die noch feuchte weiße Markierungsfarbe aufgebracht und dort teileingebettet werden. Dadurch wird verbesserte Reflexion bei Anstrahlung erreicht, um die Sichtbarkeit der Markierungen bei Anstrahlung zu erhöhen.

Es ist auch bekannt, dass interne Totalreflexion eine weitgehend verlustfreie Reflexion bereitstellt, sodass durch diesen Effekt sehr hohe Reflexionswerte erzielt werden. Durch das Auftreten des Effektes im Inneren eines transparenten Körpers an der Grenzschicht zu einem anderen optisch dünnerem Medium müssen keine Spiegelflächen separat bereitgestellt oder gefertigt werden. Des Weiteren stellt sich nicht die Problematik, dass der Reflexionsgrad der Spiegelflächen durch äußere Einflüsse beeinträchtigt werden kann, beispielsweise durch Verschmutzung.

Weiterhin sind aus dem Stand der Technik Sicherheitsmerkmale, beispielsweise in Form von Bildmarken, bekannt. Sicherheitsmerkmale sind charakteristische Eigenschaften, die die Echtheit eines Gegenstandes beweisen und eine Fälschung unmöglich machen oder zumindest erheblich erschweren sollen. Solche Sicherheitsmerkmale sind oft in Form von optisch wahrnehmbaren Bildmarken, beispielsweise Wasserzeichen oder Hologrammen, auf den zu kennzeichnenden Gegenständen angebracht. Oftmals ist die Bereitstellung und Herstellung solcher Sicherheitsmerkmale aufwändig, sodass generell ein Bedarf besteht, zuverlässige Sicherheitsmerkmale bereitzustellen, deren Aufbau und Herstellung einfach und kostengünstig sind.

Weiterer Stand der Technik wird in den Dokumenten US 2 713 286 A, WO 2014/209607 A1, US 4 123 140 A, EP 0 704 719 A2, US 3 190 178 A und US 3 310 900 A offenbart.

Aufgabe der vorliegenden Erfindung ist es daher, eine verbesserte Variante eines retroreflektierenden Körpers mit einem optisch wahrnehmbaren Merkmal bereitzustellen. Eine weitere Aufgabe der Erfindung besteht darin, eine verbesserte Variante eines retroreflektierenden KFZ-Kennzeichenschildes oder Verkehrsschildes und eine verbesserte retroreflektierende Folie mit einem optisch wahrnehmbaren Merkmal bereitzustellen.

Diese Aufgabe wird mit einem retroreflektierenden Körper mit den Merkmalen des Anspruchs 1, einem Verfahren mit den Merkmalen des Anspruchs 16, einer Verwendung des retroreflektierenden Körpers als KFZ-Kennzeichenschild und/oder Verkehrsschild mit den Merkmalen des Anspruchs 30 sowie einem Verfahren zur Herstellung eines KFZ-Kennzeichenschildes und/oder eines Verkehrsschildes mit den Merkmalen des Anspruchs 31 gelöst. Vorteilhafte weitere Ausgestaltungen sind jeweils in den Unteransprüchen angegeben. Dabei können alle Kombinationen wie auch vereinzelte Kombinationen zwischen dem retroreflektierenden Körper, dem Verfahren zur Herstellung des retroreflektierenden Körpers, der Verwendung sowie dem Verfahren zur Herstellung eines KFZ-Kennzeichenschildes und/oder eines Verkehrsschildes zusammen genutzt werden. Weiterhin ist es jeweils auch vorgesehen und möglich, einzelne oder mehrere Merkmale des retroreflektierenden Körpers, der Verfahren sowie der Verwendungen beliebig zu kombinieren.

Erfindungsgemäß wird ein retroreflektierender Körper mit einem optisch wahrnehmbaren Merkmal vorgeschlagen, der einen Träger aufweist, auf dessen Oberseite eine Binderschicht angeordnet ist. Dabei ist in der Binderschicht eine Mehrzahl transparenter Elemente wenigstens teilweise so eingebettet, dass Licht in die transparenten Elemente einfallen kann, wobei die Oberfläche der transparenten Elemente zumindest bereichsweise als Kugelabschnitt ausgebildet ist. Weiterhin sind die Kugelabschnitte der transparenten Elemente in die Binderschicht eingebettet und zur Oberseite des Trägers hin orientiert. Dabei weist der retroreflektierende Körper einen ersten Teilbereich auf, in dem ein erster Anteil der transparenten Elemente jeweils mit den Kugelabschnitten wenigstens bereichsweise an mit einem optisch wesentlich dünneren Medium, wie beispielsweis Gas oder Vakuum, gefüllte Räume angrenzt, wobei das optisch wahrnehmbare Merkmal von dem ersten Teilbereich ausgebildet wird.

"Optisch dünner" bezieht sich dabei auf das Material der transparenten Elemente.

Als Träger in diesem Zusammenhang ist ein Körper gemeint, der vorzugsweise flach ausgestaltet ist. Weiterhin kann eine beliebige Schicht gemeint sein, die geeignet ist, dass auf ihr eine Binderschicht mit den oben genannten transparenten Elementen angeordnet werden kann. Die Oberseite des Trägers in diesem Zusammenhang beschreibt die Seite des Trägers, welche einem Lichteinfall zugewandt ist und auf der die Binderschicht mit den oben beschriebenen transparenten Elementen angeordnet ist. Weiterhin kann der Träger auch andere Seiten aufweisen, wie beispielsweise eine untere Seite oder Randseiten, welche nicht zum Lichteinfall hin orientiert sind.

Ein optisch wahrnehmbares Merkmal in diesem Zusammenhang beschreibt einen charakteristischen Licht- bzw. Reflexionseffekt, der in einem bevorzugten Ausführungsbeispiel einen Farbeffekt aufweist. Dabei unterscheidet sich in einem besonders bevorzugten Ausführungsbeispiel der erste Teilbereich von dem übrigen Bereich des retroreflektierenden Körpers dadurch, dass der erste Teilbereich Licht unterschiedlich reflektiert als der übrige Bereich. Besonders bevorzugt ist dabei, dass der erste Teilbereich bei Lichteinstrahlung dieses Licht mit einem charakteristischen Farbeffekt reflektiert. Dadurch ergibt sich, dass der erste Teilbereich für den Betrachter das oben genannte optisch wahrnehmbare Merkmal ausbildet. In einem bevorzugten Ausführungsbeispiel hat das optisch wahrnehmbare Merkmal im Wesentlichen die Form des ersten Teilbereiches.

Weiterhin ist vorgesehen, dass auch übrige Bereiche des retroreflektierenden Körpers, beispielsweise ein zweiter Teilbereich des retroreflektierenden Körpers, Licht reflektieren. Jedoch ist vorgesehen, dass der erste Teilbereich Licht besonders markant und farbig reflektiert, so dass sich die Reflexion des ersten Teilbereichs von der Reflexion der übrigen Bereiche, beispielsweise des zweiten Teilbereichs, abhebt und dadurch das optisch wahrnehmbare Merkmal für den Betrachter hervorsticht. Dabei kann auch vorgesehen sein, dass der erste Teilbereich des retroreflektierenden Körpers zwar Licht farbig reflektiert, jedoch nicht retroreflektiert. Für den ersten Teilbereich kann also der Anleuchtwinkel vom Betrachtungswinkel abweichen. Bevorzugt ist, dass bei schräger Anleuchtung des retroreflektierenden Körpers ein Farbeffekt sichtbar wird, wobei der Betrachtungswinkel, bei dem der Farbeffekt sichtbar ist, ungleich dem Anleuchtungswinkel ist.

Es hat sich überraschenderweise ergeben, dass ein erster Teilbereich, bei dem ein erster Anteil von 10 bis 90% der transparenten Elemente jeweils mit den Kugelabschnitten wenigstens bereichsweise an mit einem optisch dünneren Medium oder vakuumgefüllte Räume grenzen, sehr vorteilhafte Reflexionseffekte bereitstellen, wobei dieser erste Teilbereich dann ein optisch wahrnehmbares Merkmal ausbildet. Die Reflexionseffekte eines beschriebenen ersten Teilbereichs mit Raumausbildung bei 10 bis 90% der transparenten Elemente unterscheiden sich deutlich in den Reflexionseffekten von anderen Bereichen mit transparenten Elementen ohne wesentliche Raumausbildung an den transparenten Elementen.

In einem bevorzugten Ausführungsbeispiel beträgt der erste Anteil transparenter Elemente in dem ersten Teilbereich daher vorzugsweise 10 bis 90%. In einem weiteren besonders bevorzugten Ausführungsbeispiel beträgt der erste Anteil der transparenten Elemente mit Raumausbildung in dem ersten Teilbereich 10 bis 50%. In einem weiteren ganz besonders bevorzugten Beispiel beträgt der erste Anteil der transparenten Elemente mit Raumausbildung an den transparenten Elementen in dem ersten Teilbereich 20 bis 30%.

Durch die Ausgestaltung und Anordnung eines ersten Teilbereiches, innerhalb dessen ein erster Anteil der transparenten Elemente mit einer oben beschriebenen Raumausbildung versehen ist, kommt es in diesem Bereich zu den oben genannten besonderen Reflexionseffekten, die sich von anderen Bereichen, insbesondere einem zweiten Teilbereich des retroreflektierenden Körpers abheben. Dadurch wird erreicht, dass ein retroreflektierender Körper mit einem in der Art der Reflexion hervorhebendes Merkmal versehen wird. Dieses hervorgehobene Merkmal kann dann vom Betrachter als das oben genannte optisch wahrnehmbare besondere Merkmal wahrgenommen werden.

Unter Lichteinstrahlung tritt so ein optischer Effekt ein, der den ersten Teilbereich mit einem hervorgehobenen Effekt anders reflektieren lässt als die übrigen Bereiche des retroreflektierenden Körpers. Die überraschenderweise auftretenden Reflexionseffekte sind besonders ausgeprägte farbige Reflexionseffekte, welche sich in der Art der Reflexion zu den übrigen Bereichen unterscheiden. Wenn der erste Teilbereich als ein Zeichen, Schrift oder ein Muster etc. ausgestaltet wird, kann so ein bestimmtes Merkmal oder eine Marke in dieser Form als optisch wahrnehmbares Zeichen in die Reflexionsfläche eingebracht werden.

In einem weiteren bevorzugten Ausführungsbeispiel weist der retroreflektierende Körper einen zweiten Teilbereich auf, bei dem ein zweiter Anteil der transparenten Elemente an den Kugelabschnitten wenigstens bereichsweise an einen mit einem optisch dünneren Medium gefüllten oder vakuumgefüllten Raum angrenzt, wobei der zweite Anteil maximal 50% des ersten Anteils beträgt, bevorzugt maximal 30% und besonders bevorzugt maximal 15%.

Damit der Betrachter ein optisch wahrnehmbares Merkmal sieht, ist es notwendig, dass der Bereich, welcher das optisch wahrnehmbare Merkmal ausbildet, sich von den übrigen Bereichen abgrenzt. Es hat sich ergeben, dass sich ein erster Bereich, in dem transparente Elemente vorhanden sind, die an einen mit einem optisch dünneren Medium gefüllten oder vakuumgefüllten Raum angrenzen, der z.B. als Spalt ausgebildet ist, von einem zweiten Bereich unterscheidet, in dem wesentlich weniger transparente Elemente pro Fläche vorhanden sind als im ersten Bereich, die an einen mit einem optisch dünneren Medium gefüllten oder vakuumgefüllten Raum angrenzen. Es ist besonders bevorzugt, dass der erste Teilbereich, welcher das optisch wahrnehmbare Merkmal ausbildet, einen wesentlich größeren Prozentsatz an transparenten Elementen mit Raumbildung aufweist, als die übrigen Bereiche, insbesondere der zweite Teilbereich, so dass sich diese Bereiche ausreichend voneinander abheben, wenn sie mit Lichteinfall beaufschlagt werden.

In einer weiteren bevorzugten Ausgestaltungsform ist vorgesehen, dass auf der Oberseite des Trägers eine Reflexionsschicht angeordnet ist, an die die Binderschicht angrenzt und wobei die Binderschicht im Wesentlichen transparent ausgestaltet ist.

Weiterhin ist besonders bevorzugt, dass die Reflexionsschicht eine dünne metallische Schicht aufweist, bevorzugt aus Aluminium oder Silber.

Die Reflexionsschicht kann dabei bevorzugter Weise zwischen der Trägeroberseite und der Binderschicht angeordnet sein. Dabei grenzt eine reflektierende Seite der Reflexionsschicht zumindest bereichsweise an die Binderschicht an.

In einer weiteren Ausgestaltungsform ist bevorzugt, dass die Reflexionsschicht im ersten Bereich ein vermindertes bis kein Retroreflexionsvermögen gegenüber dem zweiten Bereich aufweist. Besonders bevorzugt ist, dass der erste Teilbereich des retroreflektierenden Körpers Licht farbig reflektiert, jedoch nicht retroreflektiert, sondern, dass für den ersten Teilbereich der Anleuchtwinkel vom Betrachtungswinkel, in dem der Farbeffekt sichtbar ist, abweicht. Bevorzugt ist, dass bei schräger Anleuchtung des retroreflektierenden Körpers ein Farbeffekt im ersten Teilbereich sichtbar wird, wobei der Betrachtungswinkel, bei dem der Farbeffekt sichtbar ist, ungleich dem Anleuchtungswinkel ist.

In einer besonders bevorzugten Ausgestaltungsform ist vorgesehen, dass die Räume zwischen den transparenten Elementen und der Binderschicht ausgebildet sind. Insbesondere hat es sich als vorteilhaft erwiesen, wenn diese Räume als Spalte zwischen den transparenten Elementen und der Binderschicht ausgebildet sind.

Gemäß der obigen Beschreibung sind die Räume mit einem wesentlich optisch dünneren Medium oder Vakuum gefüllt. Optisch dünneres Medium ist hier in Bezug auf das Material der transparenten Elemente zu verstehen. Beispielsweise kann dabei der Spalt bzw. der Raum, welcher an ein transparentes Element grenzt, mit Luft gefüllt sein oder ein Vakuum aufweisen. Die Kombination der Materialien eines transparenten Elementes mit dem Raum bzw. dem Spalt ist frei wählbar, solange die Voraussetzungen für eine Lichtbrechung an der Grenzfläche von dem transparenten Element für den Raum bzw. dem Spalt gewährleistet sind.

Weiterhin ist es besonders bevorzugt, dass die transparenten Elemente zur Lichtbrechung eingerichtet sind, so dass schräg in die transparenten Elemente eintretendes Licht eine Spektralzerlegung erfährt.

In einer weiteren Ausgestaltungsform ist vorgesehen, dass die transparenten Elemente nebeneinander im Wesentlichen in einer zur Oberseite des Trägers parallelen Ebene angeordnet sind.

Weiterhin ist bevorzugt, dass die transparenten Elemente im Wesentlichen als Kugeln ausgestaltet sind.

In einer weiteren Ausgestaltungsform ist vorgesehen, dass auf den ersten Teilbereich einfallendes Licht nur teilweise reflektiert wird. Es ist möglich, dass nur Licht bestimmter Wellenlängen reflektiert wird. Dadurch entsteht der Effekt, dass der erste Teilbereich in einer bestimmten Farbe erscheint, je nachdem welche Lichtwellenlängen reflektiert werden. Dabei ist es denkbar, dass der Effekt dadurch zustande kommt, dass in die transparenten Elemente einfallendes Licht zumindest teilweise aufgebrochen und sodann in einzelnen Farben reflektiert wird, so dass der Betrachter dann die verschiedenen Farben entsprechend wahrnimmt.

Weiterhin ist auch möglich, dass ein Reflexionseffekt des ersten Teilbereiches dadurch zustande kommt, dass wenigstens teilweise an der Grenzfläche des transparenten Elements zu dem Raum innere Totalreflexion auftritt. Es kann vorgesehen sein, dass die transparenten Elemente und die Räume, die mit einem optisch dünneren Medium oder Vakuum gefüllt sind, so angeordnet sind, dass einfallendes Licht zumindest teilweise an den Grenzflächen zwischen den transparenten Elementen und den Räumen reflektiert wird.

In einem weiteren Ausführungsbeispiel umfasst der retroreflektierende Körper eine transparente Beschichtung, die auf der Binderschicht und/oder den transparenten Elementen angeordnet ist.

In einer weiteren bevorzugten Ausführungsform ist die Beschichtung eingefärbt.

Äußere Einflüsse wie beispielsweise Temperatur, Feuchtigkeit oder Korrosion können zu einer Veränderung der Oberfläche der transparenten Elemente und/oder der Binderschicht führen. Dadurch kann Licht gehemmt werden, in die Binderschicht und/oder ins Innere der transparenten Elemente einzudringen, wodurch eine Reflexion erschwert bzw. verhindert wird. Als Beschichtung kann hier eine transparente Schutzschicht vorgesehen sein, die die Anhaftung von Schmutz an den transparenten Elementen und/oder der Binderschicht verhindert. Des Weiteren können so Veränderungen durch äußere Einflüsse verhindert werden. Es kann zudem vorgesehen sein, dass die Beschichtung einen Lotuseffekt aufweist und so die Anhaftung von Schmutz verhindert. Auch die Ansammlung von Kondenswasser oder das Anhaften von Eis und Schnee können die reflektierende Funktion des Körpers hemmen. Eine Beschichtung kann beispielsweise so ausgestaltet sein, dass sie das Anhaften von Kondenswasser und/oder Eis und Schnee verhindert. Weiterhin kann zusätzlich oder getrennt davon vorgesehen sein, dass eine Beschichtung zum Lichteinfall hin im Wesentlichen glatt ist und dass Reinigen des retroreflektierenden Körpers vereinfacht.

Es ist bevorzugt, dass die Beschichtung eine Dicke im Bereich von 5 bis 200µm aufweist, besonders bevorzugt im Bereich von 10 bis 50µm.

In einer weiteren Ausgestaltungsform des retroreflektierenden Körpers ist das optisch wahrnehmbare Merkmal als ein Schriftzeichen und/oder als ein Emblem und/oder als eine Zahl und/oder als ein Muster ausgestaltet.

In einer weiteren Ausgestaltungsform ist bevorzugt, dass die transparenten Elemente Maße im Bereich von 25 bis 100µm aufweisen, besonders bevorzugt im Bereich von 30 bis 70µm und insbesondere 50µm.

In einer weiteren Ausgestaltungsform ist bevorzugt, dass die Binderschicht eine Dicke von 60 bis 250µm aufweist, besonders bevorzugt 60 bis 120µm.

In einer weiteren bevorzugten Ausgestaltungsform ist vorgesehen, dass der retroreflektierende Körper als eine Folie ausgestaltet ist. Weiterhin ist bevorzugt, dass die Folie als Bandmaterial ausgestaltet ist. Das Bandmaterial kann dabei aufwickelbar sein.

In einer weiteren Ausgestaltungsform ist der retroreflektierende Körper als Verkehrs- oder Kfz-Kennzeichenschild ausgestaltet.

In einer weiteren Ausgestaltungsform weist der retroreflektierende Körper eine Legende, beispielsweise mit Zahlen und/oder Schriftzeichen, insbesondere Buchstaben auf. Besonders bevorzugt ist es dabei, dass die Legende reliefartig und/oder plastisch ausgestaltet ist. Weiterhin kann die Legende in den Körper eingeprägt werden und erhabene Bereiche aufweisen. Die erhabenen Bereiche sind bevorzugter Weise eingefärbt. Für die Einfärbung kann beispielsweise ein Thermotransferverfahren vorgesehen werden, wobei die erhabenen Bereiche durch Farbübertragung von einer Trägerfarbfolie eingefärbt werden.

In einer weiteren Ausgestaltungsform kann vorgesehen sein, dass der reflektierende Körper als ein Band ausgestaltet ist. Besonders bevorzugt ist dabei, dass das Band aufwickelbar ist. Weiterhin kann vorgesehen sein, dass aus dem Band Schildplatinen austanzbar sind. Das band kann dabei Metall aufweisen. Beispielsweise kann das Band einen Träger aufweisen, welcher aus Metall, wie zum Beispiel Aluminium, ausgestaltet ist.

Es hat sich überraschenderweise ergeben, dass sich bei Laserung einer retroreflektierenden Folie mit einer Struktur aus transparenten Kugeln, die in einer Binderschicht eingebettet sind, besondere Farbeffekte in den gelaserten Bereichen bei schräger Anleuchtung ergeben. Weiter hat sich ergeben, dass nach der Laserung Spalte zwischen den Kugeln und der Binderschicht in den gelaserten Bereichen ausgebildet sind.

Dazu ist eine Folie aus dem Stand der Technik des Herstellers 3M vom Typ "Scotchlite™ 4750 Oralite® 5100" mit einem gepulsten Laser mit hoher Leistungsdichte innerhalb eines ersten Teilbereichs beaufschlagt worden. Die Laserung dieser Folie fand dabei mit zwei verschiedenen Lasern statt. Bei beiden kam es innerhalb des gelaserten ersten Teilbereichs zu den oben genannten Reflexionseffekten mit Farben, welche in den nicht gelaserten und unbehandelten Bereichen der Folie nicht auftraten.

Eine Laserung einer ersten Probe fand mit einem Picosekunden-Laser mit einer Wellenlänge von 1030nm bei den folgenden Einstellungen statt:
Schreibgeschwindigkeit: 2000-10000mm/s
Leistung: 5-100% Mittlere Leistung, bei einer Mittleren Leistung von ca. 10W
Pulsfolgefrequenz: im Bereich 1MHz
Pulsweite: im Bereich von einigen bis einigen zig Picosekunden
Defokussierung: optional möglich

Eine weitere Laserung einer zweiten Probe fand mit einem Nanosekunden-Laser mit einer Wellenlänge von 1064nm bei den folgenden Einstellungen statt:
Schreibgeschwindigkeit: 100-1000mm/s
Leistung: 5-100% Mittlere Leistung, bei einer Mittleren Leistung von ca. 20W
Pulsfolgefrequenz: 2 bis 60kHz
Pulsweite: im Nanosekundenbereich
Defokussierung: optional möglich mit 35 bis 120mm

Es wurde jeweils ein Teilbereich der Folienproben gelasert.

Beide Proben der gelaserten Folie, weisen einen starken optisch wahrnehmbaren Effekt jeweils in den gelaserten Bereichen auf. Dieser optisch wahrnehmbare Effekt ist derart ausgestaltet, dass die gelaserten Bereiche Farbeffekte aufweisen, welche in den nicht gelaserten Bereichen und bei nicht gelaserten Folien nicht auftraten. Des Weiteren weisen die Folien in den gelaserten Bereichen geringe bis keine Retroreflektivität auf. Die Farbeffekte sind bei schräger Lichteinstrahlung wahrnehmbar, wobei der Anstrahlwinkel ungleich dem Betrachtungswinkel ist.

Aus einer Untersuchung der Proben nach der Laserung ergibt sich, dass sich innerhalb der gelaserten Bereiche mit den starken optisch wahrnehmbaren Farbeffekten die Binderschicht teilweise von den Kugeln abgelöst hat, sodass ein Spalt zwischen Kugel und Binderschicht vorhanden ist.

Durch die Bearbeitung der oben genannten Folie durch die benannten gepulsten Laser mit hoher Leistungsdichte kommt es vermutlich zum Aufschmelzen der Binderschicht und damit zu einer Ablation bzw. einem Abtrennen des Polymers von den Kugeln. Beim Abkühlen zieht sich vermutlich das Material wieder zusammen und es entsteht ein Spalt zwischen Kugel und Binderschicht. Der optisch wahrnehmbare Effekt, der dann unter schräger Beleuchtung auftritt ergibt sich vermutlich durch Lichtbrechung. Die Lichtbrechung führt dabei vermutlich beim Übergang der transparenten Kugeln zu einer Spektralzerlegung des Lichts in verschiedene Wellenlängen, ähnlich wie bei einem Prisma. An der Grenzfläche der transparenten Kugeln zu den Spalten wird Licht vermutlich total reflektiert und anschließend wieder zum Betrachter hin zurückgeworfen. Vermutlich entsteht so ein Farbeffekt durch die vorherige Spektralzerlegung des Lichtes in die verschiedenen Farbbündel.

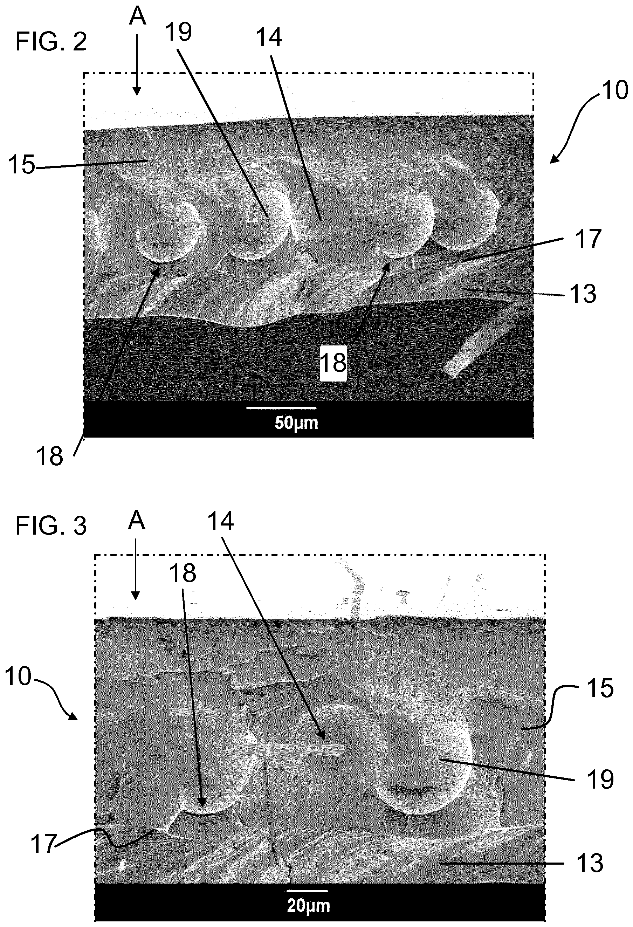

Sowohl die gelaserte Folie mit auftretendem Farbeffekt wie auch die unbehandelte, aus dem Stand der Technik bekannte, Folie wurden anhand eines Kältebruchs gebrochen und untersucht. Hierzu wird auf die Figurenbeschreibung zu den Figuren 2 bis 11 weiter unten verwiesen. Diese Untersuchung ergab, dass bei der Folie mit dem auftretenden farbigen Reflexionseffekt die Anzahl der Glaskugeln, an denen ein Luftspalt auftritt, in etwa 10 bis 90% der innerhalb der gelaserten Kontur befindlichen Kugeln entspricht. In den nicht gelaserten Bereichen der Folienproben, welche keinen besonderen Farbeffekt aufweisen, kam es nicht zu einer oben beschriebenen Spaltausbildung an den Kugeln.

Zusätzlich wie auch getrennt von dem oben erläuterten retroreflektierenden Körper mit einem optisch wahrnehmbaren Merkmal wird gemäß einem weiteren Gedanken der Erfindung ein Verfahren zur Herstellung eines retroreflektierenden Körpers mit einem optisch wahrnehmbaren Merkmal vorgeschlagen. Das Verfahren umfasst zumindest die folgenden Schritte:
- Bereitstellen eines Trägers auf dessen Oberseite eine Binderschicht angeordnet ist, wobei in der Binderschicht eine Mehrzahl transparenter Elemente wenigstens teilweise so eingebettet sind, dass Licht in die transparenten Elemente einfallen kann, wobei die Oberfläche der transparenten Elemente zumindest bereichsweise als Kugelabschnitt ausgebildet ist und wobei die Kugelabschnitte der transparenten Elemente in die Binderschicht eingebettet sind und zur Oberseite des Trägers hin orientiert sind,
- Aufbringen einer Strahlung auf einen ersten Teilbereich des retroreflektierenden Körpers.

Dabei bilden sich in dem ersten Teilbereich bei einem ersten Anteil der transparenten Elemente zwischen der Binderschicht und den Kugelabschnitten zumindest teilweise Räume aus. Die Räume sind dabei mit einem optisch wesentlich dünneren Medium als die transparenten Elemente wie Gas, insbesondere Umgebungsluft oder Vakuum gefüllt. Das optisch wahrnehmbare Merkmal wird dabei von dem Teilbereich ausgebildet.

"Optisch dünner" bezieht sich dabei auf das Material der transparenten Elemente.

In einer weiteren Ausgestaltungsform des Verfahrens beträgt der erste Anteil transparenter Elemente mit Raumbildung 10 bis 90%. In einer weiteren bevorzugten Ausgestaltungsform beträgt der erste Anteil transparenter Elemente mit Raumbildung 10 bis 50%. In einer besonders bevorzugten Ausgestaltungsform beträgt der erste Anteil transparenter Elemente mit Raumbildung 20 bis 30%.

In einer weiteren Ausgestaltungsform weist der Träger einen zweiten Teilbereich auf, bei dem sich bei einem zweiten Anteil der transparenten Elemente zwischen der Binderschicht und den Kugelabschnitten zumindest teilweise Räume ausbilden, die mit einem optisch dünneren Medium oder Vakuum gefüllt sind. Dabei beträgt der zweite Anteil maximal 50% des ersten Anteils, bevorzugt maximal 30% und besonders bevorzugt maximal 15%.

In einer weiteren bevorzugten Ausgestaltungsform des Verfahrens bilden sich die Räume jeweils als Spalt zwischen den transparenten Elementen und der Binderschicht aus.

In einer weiteren Ausgestaltungsform des Verfahrens ist die Strahlung eine Laserstrahlung, deren Wellenlänge vorzugsweise in sichtbaren, im nahen Infrarot oder im nahen UV-Bereich liegt.

Weiterhin ist bevorzugt, dass die Laserstrahlung gepulst ist, wobei eine Pulsdauer bevorzugt im Bereich von einigen Picosekunden (ps), besonders bevorzugt im Bereich von unter 100 ps und insbesondere bevorzugt unter einer Picosekunde liegt.

Weiterhin ist bevorzugt, dass die Binderschicht temporär aufgeschmolzen wird. Weiterhin kann vorgesehen sein, dass sich die transparenten Elemente erwärmen und dadurch ausdehnen. Vermutlich wird dadurch die Binderschicht verdrängt.

Weiterhin ist bevorzugt, dass die auf den retroreflektierenden Körper gerichtete Strahlung fokussiert ist. Besonders bevorzugt ist dabei, dass der Fokus oberhalb oder unterhalb der Binderschicht liegt. Der Fokus der Strahlung ist dabei zumindest 10 mm, bevorzugt zumindest 20 mm und besonders bevorzugt zumindest 30 mm von der Oberseite der Binderschicht beabstandet. Die Oberseite der Binderschicht ist in diesem Zusammenhang, die dem Träger abgewandten Seite der Binderschicht.

In einer weiteren Ausgestaltungsform ist vorgesehen, dass der erste Bereich mittels eines Strahlungsbündels abgerastert wird. Es ist auch möglich, dass der erste Bereich mit einem Strahlungsbündel schraffiert wird, d.h. dass die Strahlung in parallelen Linien auf die Folie aufgebracht wird. Weiterhin kann dabei auch vorgesehen sein, dass der retroreflektierende Körper mittels einer Schablone abgedeckt wird, die den ersten Teilbereich frei lässt. Dabei ist bevorzugt, dass die auf den retroreflektierenden Körper einfallende Strahlung den gesamten ersten Bereich erfasst.

Gemäß einem weiteren Gedanken der Erfindung wird zusätzlich oder getrennt davon die Verwendung eines retroreflektierenden Körpers gemäß obiger Beschreibung als Kfz-Kennzeichenschild und/oder Verkehrsschild vorgeschlagen. Besonders bevorzugt ist dabei, dass der retroreflektierende Körper in Form eines Schildes ausgebildet ist.

Zusätzlich oder getrennt ist weiterhin erfindungsgemäß ein Verfahren zur Herstellung eines Kfz-Kennzeichenschilds und/oder eines Verkehrsschildes vorgesehen, welches den Schritt umfasst, dass ein retroreflektierender Körper gemäß obiger Beschreibung in Form einer Folie auf eine Schildplatine aufkaschiert wird.

Als Schildplatine in diesem Zusammenhang ist ein Rohling zu verstehen, der als Basis für ein Schild fungiert. Dieser Rohling umfasst noch keine Beschichtung, welche retroreflektierend wirkt und das optisch wahrnehmbare Merkmal aufweist. Diese Funktionen können dadurch erreicht werden, dass eine retroreflektierende Folie mit dem optisch wahrnehmbaren Merkmal gemäß obiger Beschreibung als Beschichtung auf den Schildrohling aufgebracht wird.

Weitere vorteilhafte Ausgestaltungen und Weiterbildungen sind in den nachfolgenden Figuren angegeben. Die daraus hervorgehenden jeweiligen Merkmale sind jedoch nicht auf einzelne Figuren oder Ausgestaltungen beschränkt. Vielmehr können ein oder mehrere Merkmale der obigen Beschreibung mit einzelnen oder mehreren Merkmalen der Figuren zusätzlich zu Weiterbildungen kombiniert werden.

Es zeigen:
- Fig. 1:: einen erfindungsgemäßen retroreflektierenden Körper,
- Fig. 2 bis 8:: elektronenmikroskopische Querschnitte einer erfindungsgemäßen Folie und
- Fig. 9 bis 11: elektronenmikroskopische Querschnitte einer Folie aus dem Stand der Technik.

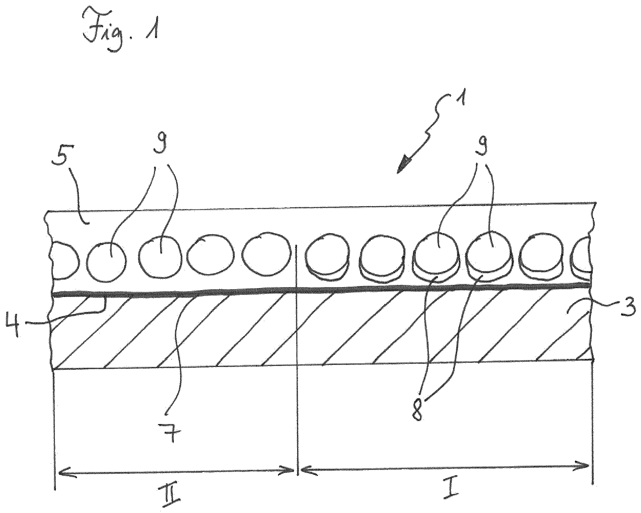

Figur 1 zeigt die schematische Ansicht eines bevorzugten Ausführungsbeispiels eines retroreflektierenden Körpers 1. Der retroreflektierende Körper 1 weist einen Träger 3 auf, auf dessen Oberseite 4 eine Binderschicht 5 aufgebracht ist, in der transparente Kugeln 9 eingebracht sind. Zwischen dem Träger 3 und der Binderschicht 5 ist eine Reflexionsschicht 7 angeordnet. Der hier schematisch dargestellte Ausschnitt eines retroreflektierenden Körpers weist zwei Teilbereiche I und II auf. Innerhalb des ersten Teilbereichs I sind transparente Kugeln 9 so in die Binderschicht eingebettet, dass sich an Abschnitten der Kugeln, welche zur Oberseite 4 des Trägers hin orientiert sind, bereichsweise an Spalte 8 angrenzen.

Diese Spalte 8 sind mit einem optisch dünneren Medium als das Material der transparenten Kugeln gefüllt. Der retroreflektierende Körper weist auch einen zweiten Teilbereich II auf. In diesem Teilbereich weisen die hier in der Binderschicht angeordneten transparenten Kugeln keine Spaltbildung auf. Es ist jedoch möglich, dass im Fortlauf des zweiten Teilbereichs II einzelne transparente Kugeln auch eine Spaltbildung aufweisen. Die Anzahl der transparenten Kugeln mit Spaltbildung übertrifft bei Weitem die Anzahl der transparenten Kugeln mit Spaltbildung im zweiten Bereich. Für den ersten Teilbereich I ist es bevorzugt, dass ein erster Anteil von 10 bis 90% der transparenten Kugeln eine Spaltbildung aufweisen, besonders bevorzugt ist es, dass 10 bis 50% der transparenten Kugeln eine Spaltbildung aufweisen und ganz besonders bevorzugt ist es, dass ein erster Anteil von 20 bis 30% der transparenten Kugeln eine Spaltbildung aufweisen. Auch im zweiten Teilbereich II ist es möglich, dass vereinzelte transparente Kugeln eine Spaltbildung aufweisen. Es ist bevorzugt, dass im zweiten Teilbereich II ein zweiter Anteil maximal 50% des ersten Anteils im ersten Teilbereich beträgt, bevorzugt maximal 30% und ganz besonders bevorzugt maximal 15%. Bevorzugt weist die Reflexionsschicht im ersten Teilbereich I ein vermindertes bis kein Reflexionsvermögen gegenüber dem zweiten Teilbereich II auf.

Die folgenden Figuren 2 bis 8 zeigen Proben einer Folie, welche mit dem erfindungsgemäßen Verfahren behandelt wurde. Hierzu wurde die Folie 10 mit einem Laserstrahl beaufschlagt. Grundlage für die Laserbeaufschlagung war eine glasbeadbasierte retroreflektierende Folie 10,10* wie sie von KFZ-Kennzeichen bekannt ist. Im speziellen ist hier der Folientyp "3M Scotchlite™ 4750 Oralite® 5100" verwendet worden. Die Bearbeitung wurde mit einem gepulsten Laser mit hoher Leistungsdichte durchgeführt. Im speziellen wurden zwei verschiedene Laser eingesetzt:
a. Picosekunden-Laser mit einer Wellenlänge von 1030nm
   Einstellungen:
   Schreibgeschwindigkeit: 2000-10000mm/s
   Leistung: 5-100% Mittlere Leistung, bei einer Mittleren Leistung von ca. 10W Pulsfolgefrequenz: im Bereich 1MHz
   Pulsweite: im Bereich von einigen bis einigen zig Picosekunden
   Defokussierung: optional möglich
b. Nanosekunden-Laser mit einer Wellenlänge von 1064nm
   Einstellungen:
   Schreibgeschwindigkeit: 100-1000mm/s
   Leistung: 5-100% Mittlere Leistung, bei einer Mittleren Leistung von ca. 20W
   Pulsfolgefrequenz: 2 bis 60kHz
   Pulsweite: im Bereich von einigen bis einigen zig Nanosekunden
   Defokussierung: optional möglich mit 35 bis 120mm

Bei der Laserung mit dem Picosekunden-Laser wurden ausgeprägtere Farbeffekte erreicht als bei Laserung mit dem Nanosekunden-Laser.

Die Proben wurden mit Hilfe von Flüssigstickstoff auf eine Temperatur von bis zu minus 196°C abgekühlt, wodurch das Material fest wurde und sich dadurch, ähnlich wie eine Glasscheibe, zerbrechen ließ. Aufgrund der sehr geringen Dimensionen der Glaskugel ließen sich keine Brüche durch die Glaskugeln hindurch erzielen. Die angewendete Methode war aber für die anderen Folienschichten sehr effektiv und hat Brüche erzielt, in denen die Querschnitte der reflektierenden Folie sehr gut erkennbar sind. Um bei der Elektronenmikroskopie Aufladungen durch den Elektronenstrahl zu vermeiden, wurde auf die jeweiligen Querschnitte eine dünne Schicht Gold von ca. 30 nm mittels Sputtern aufgetragen. Mit Hilfe eines leitfähigen Klebebands wurden die Proben dann mit einem geerdeten Probenhalter verbunden, so dass die Ladungsträger schnell abtransportiert werden konnten.

In den nachfolgenden Figuren 2 bis 11 sind Proben als mikroskopischer Querschnitt dargestellt. Dabei stellen die Figuren 2 bis 8 eine retroreflektierende Folie 10,10* des Herstellers 3M vom Typ "3M Scotchlite™ 4750 Oralite® 5100" dar, welche mit einem der oben genannten Laserungen beaufschlagt wurden. Diese Proben weisen in den gelaserten Bereichen Farbeffekte auf.

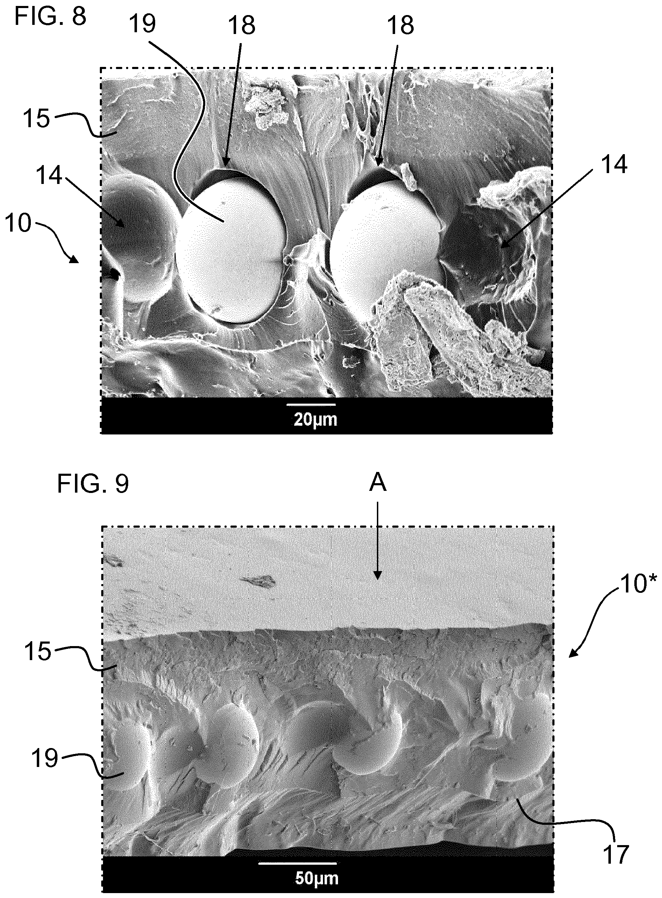

In den Figuren 9 bis 11 sind Proben im elektronenmikroskopischen Querschnitt der oben genannten Folie aus dem Stand der Technik dargestellt, welche nicht behandelt wurde. Dabei ist die Folie aus dem Stand der Technik in verschiedenen Ansichten dargestellt.

Aus diesen Darstellungen geht hervor, dass die behandelten Proben alle in den gelaserten Bereichen eine Ablösung der Binderschicht von den Glaskugeln aufweisen, durch die sich ein Raum zwischen der Kugel und der Binderschicht ergibt.

Die unbehandelte Folie, wie in den Figuren 9 bis 11 dargestellt, weist keine Ablösung der Binderschicht von der Glaskugel auf. Bei dieser Probe sind die Glaskugeln vollständig in die Binderschicht eingebettet.

In den nachfolgenden Figuren ist einheitlich die Oberfläche der Folie in Anstrahlrichtung mit A bezeichnet, die mit dem erfindungsgemäßen Verfahren behandelte Folie mit 10, die unbehandelte Folie mit 10*, die Binderschicht mit 15, die Glaskugel mit 19, Abdrücke der Glaskugel mit 14, Spalte zwischen der Binderschicht und der Kugel mit 18, die Reflexionsschicht mit 17 und der Träger mit 13.

Aus Figur 2 geht der elektronenmikroskopische Querschnitt durch eine mit dem erfindungsgemäßen Verfahren behandelte Folie 10 hervor. Die Glaskugeln 19 sind hier in einer Binderschicht 15 vollständig eingebettet. Die Binderschicht 15 mit den Kugeln ist dabei auf einer Trägerschicht 13 angeordnet. An der Bruchkante ragen die Glaskugeln 19 zumeist aus der Binderschicht 15 heraus. An einigen Stellen sind lediglich Abdrücke 14 innerhalb der Binderschicht 15 verblieben, da einzelne Glaskugeln 19 während des Kältebruchs aus der Binderschicht 15 herausfallen. Die Glaskugeln 19 weisen bei dieser Probe einen Durchmesser von ca. 50 µm auf. Unterhalb der Binderschicht 15 ist eine Reflexionsschicht 17 gelegen, welche die Binderschicht 15 vollständig bedeckt. Die der Reflexionsschicht 17 abgewandte Seite der Binderschicht 15 bildet die Vorderseite A der Folie 10. Die betrachtete Probe weist Spalte 18 zwischen den Kugeln 19 und der Binderschicht 15 auf.

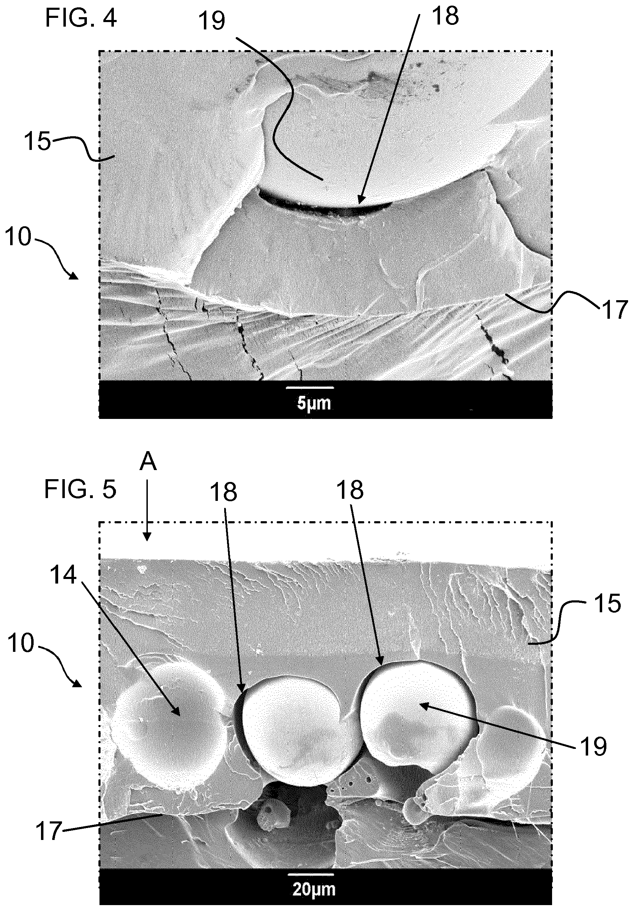

Die Figuren 3 und 4 stellen die Folie aus Figur 2 in einer Vergrößerung dar. Der Spalt 18 ist ungefähr 10 µm lang.

In Figur 5 ist eine weitere retroreflektierende Folie 10 dargestellt, die mit dem oben genannten Laser behandelt worden ist, dargestellt. Die Glaskugeln 19 weisen eine deutliche Delamination der Binderschicht 15 auf und bilden zwischen der Binderschicht 15 und der Glaskugel 19 einen Spalt 18 aus. Dieser Spalt 18 erstreckt sich in dieser Probe sogar größtenteils um die einzelnen Glaskugeln 19 herum. Durch die Beaufschlagung der retroreflektierenden Folie 10 mit der Laserstrahlung hat sich vermutlich die Binderschicht 15 von der Kugel 19 teilweise abgelöst und es ist zur Ausbildung des Spaltes 18 gekommen.

Bei dieser Probe der Figur 5 tritt bei schräger Anleuchtung ein starker optischer Effekt in Form von farbigen Ringen innerhalb der Kugel auf. Dabei enthält jeder einzelne Ring das komplette Spektrum von blau bis rot. Ein weiterer Farbeffekt in Form von leuchtenden Kreisen um die Kugel herum tritt auch außerhalb der Kugeln auf.

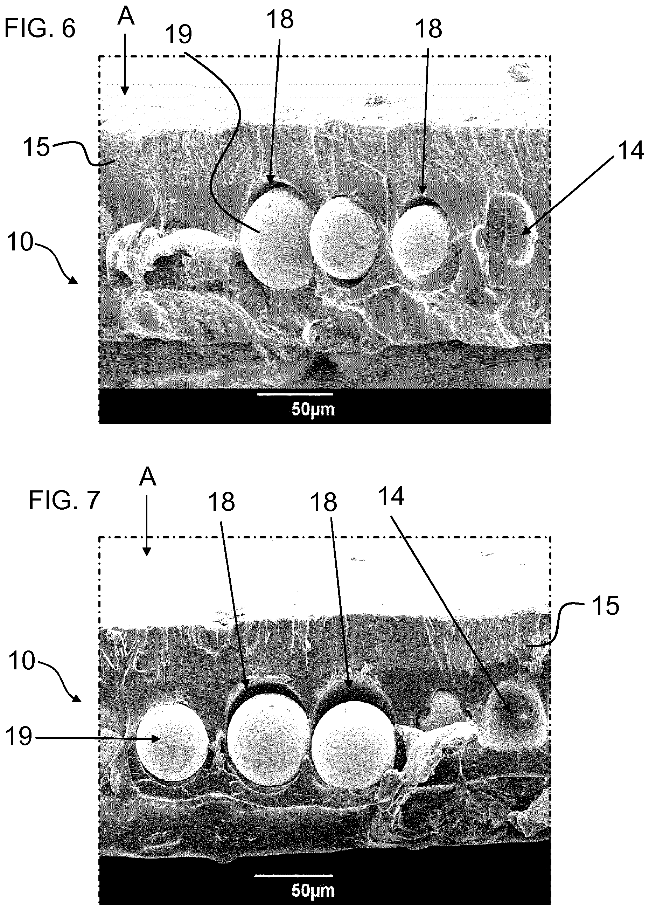

Aus den Figuren 6 bis 8 gehen weitere Aufnahmen von Proben hervor, welche erfindungsgemäß mit dem oben beschriebenen Laserverfahren behandelt wurden. Diese Proben weisen auch Spalte 18 bzw. eine Ablösung der Binderschicht 15 von den Kugeln 19 auf und bei Lichtanstrahlung die zu Figur 5 beschriebenen Farbeffekte.

Im Vergleich hierzu geht aus der Figur 9 der elektronenmikroskopische Querschnitt durch eine unbehandelte retroreflektierende Folie 10* aus dem Stand der Technik hervor. Unbehandelt meint, dass diese Folie 10* nicht mit dem oben genannten Laserverfahren behandelt wurde und nicht die oben beschriebenen Farbeffekte aufweist. Weiter weist diese Probe auch keine Spalte oder Ablösung der Binderschicht 15 von den Kugeln 19 auf. Die Binderschicht 15 besteht aus einem Polymer, in welches die einzelnen Glaskugeln 19 vollständig eingebettet sind. An der Bruchkante ragen die Glaskugeln 19 zumindest teilweise aus der Binderschicht 15 heraus. An einigen Stellen sind Abdrücke 14 in der Binderschicht 15 verblieben, wo einzelne Glaskugeln während des Kältebruchs ausgefallen sind. Diese Folie 10* weist Kugeln 19 von einem Durchmesser von ca. 50 µm auf, welche vollständig in die Binderschicht eingebettet sind.

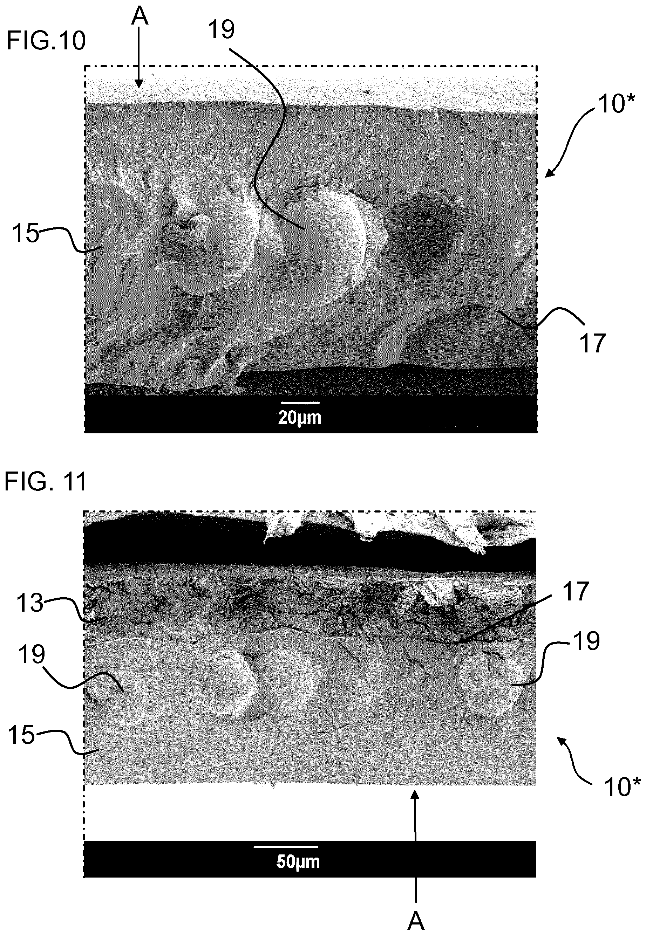

Aus Figur 10 geht ein Ausschnitt der in Figur 9 erläuterten Folie 10* hervor, welcher eine größere Vergrößerung dieser darstellt.

Aus der Figur 11 geht eine weitere Probe einer unbehandelten Folie 10*hervor, welche gegenüber der Probe aus Figur 9 um 180° gedreht ist. In dieser Ansicht liegt die Binderschicht 15 nun zur Blattseite nach unten, während die Reflexionsschicht 17 auch entsprechend zur Blattseite nach unten gewandt ist. Die Vorderseite A der Folie 1 weist nunmehr zur Blattseite nach unten. Die unbehandelte in den Figuren 9 bis 11 dargestellte Folie 10* weist Kugeln 19 auf, die vollständig in der Binderschicht 15 eingebettet sind. Sie weist dabei nicht die oben beschriebenen Farbeffekte bei schräger Anstrahlung auf.

### Bezugszeichenliste

- 1: retroreflektierender Körper
- 3, 13: Träger
- 4: Oberseite des Trägers
- 5, 15: Binderschicht
- 7, 17: Reflexionsschicht
- 8, 18: Spalt, Raum
- 9, 19: transparentes Element
- 10: retroreflektierende Folie mit erfindungsgemäßen Verfahren behandelt.
- 10*: retroreflektierende Folie aus dem Stand der Technik
- 14: Abdruck einer Glaskugel
- A: Oberfläche der Folie

## Patentansprüche

1. Retroreflektierender Körper (1,10) mit einem optisch wahrnehmbaren Merkmal aufweisend einen Träger (3,13), auf dessen Oberseite (4) eine Binderschicht (5,15) angeordnet ist, wobei in der Binderschicht (5,15) eine Mehrzahl transparenter Elemente (9,19) wenigstens teilweise so eingebettet sind, dass Licht in die transparenten Elemente (9,19) einfallen kann, wobei die Oberfläche der transparenten Elemente (9,19) zumindest bereichsweise als Kugelabschnitt ausgebildet ist und wobei die Kugelabschnitte der transparenten Elemente (9,19) in die Binderschicht (5,15) eingebettet sind und zur Oberseite (4) des Trägers (3,13) hin orientiert sind,
der retroreflektierende Körper (1,10) einen ersten Teilbereich (I) aufweist, in dem ein erster Anteil der transparenten Elemente (9,19) jeweils mit den Kugelabschnitten wenigstens bereichsweise an mit Gas gefüllte oder vakuumgefüllte Räume (8,18) angrenzt, und die Räume (8,18) zwischen den transparenten Elementen (9,19) und der Binderschicht (5,15) ausgebildet sind, wobei das optisch wahrnehmbare Merkmal von dem ersten Teilbereich (I) ausgebildet wird,
**dadurch gekennzeichnet, dass**
die Räume (8,18) jeweils als Spalt ausgebildet sind.

2. Retroreflektierender Körper (1,10) nach Anspruch 1, wobei der erste Anteil 10 bis 90% beträgt.

3. Retroreflektierender Körper (1,10) nach Anspruch 1, wobei der erste Anteil 10 bis 50% beträgt.

4. Retroreflektierender Körper (1,10) nach Anspruch 1, wobei der erste Anteil 20 bis 30% beträgt.

5. Retroreflektierender Körper (1,10) nach einem der vorherigen Ansprüche, aufweisend einen zweiten Teilbereich (II), bei dem ein zweiter Anteil der transparenten Elemente (9,19) an den Kugelabschnitten wenigstens bereichsweise an einen mit einem optisch dünneren Medium gefüllten oder vakuumgefüllten Raum (8,18) angrenzt, wobei der zweite Anteil maximal 50% des ersten Anteils beträgt, bevorzugt maximal 30% und besonders bevorzugt maximal 15%.

6. Retroreflektierender Körper (1,10) nach einem der vorherigen Ansprüche, **dadurch gekennzeichnet, dass** auf der Oberseite (4) des Trägers (3,13) eine Reflexionsschicht (7,17) angeordnet ist, an die die Binderschicht (5,15) angrenzt und wobei die Binderschicht (5,15) im Wesentlichen transparent ausgestaltet ist.

7. Retroreflektierender Körper (1,10) nach Anspruch 6, **dadurch gekennzeichnet, dass** die Reflexionsschicht (7,17) eine dünne metallische Schicht aufweist, bevorzugt aus Aluminium oder Silber.

8. Retroreflektierender Körper (1,10) nach einem der vorherigen Ansprüche, wobei die transparenten Elemente (9,19) zur Lichtbrechung eingerichtet sind, so dass schräg in die transparenten Elemente (9,19) eintretendes Licht eine Spektralzerlegung erfährt.

9. Retroreflektierender Körper (1,10) nach einem der vorherigen Ansprüche, **dadurch gekennzeichnet, dass** die transparenten Elemente (9,19) nebeneinander im Wesentlichen in einer zur Oberseite (4) des Trägers (3,13) parallelen Ebene angeordnet sind.

10. Retroreflektierender Körper (1,10) nach einem der vorherigen Ansprüche, **dadurch gekennzeichnet, dass** die transparenten Elemente (9,19) im Wesentlichen als Kugeln ausgestaltet sind.

11. Retroreflektierender Körper (1,10) nach einem der vorherigen Ansprüche, **dadurch gekennzeichnet, dass** das optisch wahrnehmbare Merkmal als ein Schriftzeichen und/oder als ein Emblem und/oder als eine Zahl und/oder als ein Muster ausgestaltet ist.

12. Retroreflektierender Körper (1,10) nach einem der vorherigen Ansprüche, **dadurch gekennzeichnet, dass** die transparenten Elemente (9,19) Maße im Bereich von 25 bis 100µm, insbesondere im Bereich von 45 bis 55µm, aufweisen.

13. Retroreflektierender Körper (1,10) nach einem der vorherigen Ansprüche, **dadurch gekennzeichnet, dass** die Binderschicht (5,15) eine Dicke im Bereich von 60 bis 250µm, insbesondere im Bereich von 60 bis 120µm, aufweist.

14. Retroreflektierender Körper (1,10) nach einem der vorherigen Ansprüche, **dadurch gekennzeichnet, dass** der retroreflektierende Körper (1,10) als Folie ausgestaltet ist.

15. Retroreflektierender Körper (1,10) nach einem der Ansprüche 1 bis 16, **dadurch gekennzeichnet, dass** der retroreflektierende Körper (1,10) als Verkehrs- oder Kfz-Kennzeichenschild ausgestaltet ist.

16. Verfahren zur Herstellung eines retroreflektierenden Körpers (1,10) mit einem optisch wahrnehmbaren Merkmal umfassend zumindest die folgenden Schritte:
a. Bereitstellen eines Trägers (3,13), auf dessen Oberseite (4) eine Binderschicht (5,15) angeordnet ist, wobei in der Binderschicht (5,15) eine Mehrzahl transparenter Elemente (9,19) wenigstens teilweise so eingebettet sind, dass Licht in die transparenten Elemente (9,19) einfallen kann, wobei die Oberfläche der transparenten Elemente (9,19) zumindest bereichsweise als Kugelabschnitt ausgebildet ist und wobei die Kugelabschnitte der transparenten Elemente (9,19) in die Binderschicht eingebettet sind und zur Oberseite (4) des Trägers (3,13) hin orientiert sind,
b. Aufbringen einer Laserstrahlung auf einen ersten Teilbereich (I) des retroreflektierenden Körpers (1,10),
**dadurch gekennzeichnet, dass**
die Laserstrahlung dergestalt aufgebracht wird, dass sich in dem ersten Teilbereich (I) bei einem ersten Anteil der transparenten Elemente (9,19) zwischen der Binderschicht (5,15) und den Kugelabschnitten zumindest teilweise Räume (8,18) ausbilden, die mit einem Gas oder Vakuum gefüllt sind, wodurch das optisch wahrnehmbare Merkmal von dem ersten Teilbereich (I) ausgebildet wird, und dass sich die Räume (8, 18) jeweils als Spalt zwischen den transparenten Elementen (9, 19) und der Binderschicht (5, 15) ausbilden.

17. Verfahren nach Anspruch 16, **dadurch gekennzeichnet, dass** der erste Anteil 10 bis 90% beträgt.

18. Verfahren nach Anspruch 16, **dadurch gekennzeichnet, dass** der erste Anteil 10 bis 50% beträgt.

19. Verfahren nach Anspruch 16, **dadurch gekennzeichnet, dass** der erste Anteil 20 bis 30% beträgt.

20. Verfahren nach einem der Ansprüche 16-19, **dadurch gekennzeichnet, dass** der Träger (3,13) einen zweiten Bereich (II) aufweist bei dem sich bei einem zweiten Anteil der transparenten Elementen (9,19) zwischen der Binderschicht (5,15) und den Kugelabschnitten zumindest teilweise mit optisch dünnerem Medium gefüllte oder vakuumgefüllte Räume (8,18) ausbilden und wobei der zweite Anteil maximal 50% des ersten Anteils beträgt, bevorzugt maximal 30% und besonders bevorzugt maximal 15%.

21. Verfahren nach einem der Ansprüche 16 - 20, **dadurch gekennzeichnet, dass** die Wellenlänge der Laserstrahlung vorzugsweise im sichtbaren, im nahen Infrarot- oder im nahen UV-Bereich liegt.

22. Verfahren nach einem der Ansprüche 16 - 21, **dadurch gekennzeichnet, dass** die Laserstrahlung gepulst ist, wobei eine Pulsdauer bevorzugt im Bereich von einigen Hundert Picosekunden, besonders bevorzugt im Bereich von unter einhundert Picosekunden und insbesondere bevorzugt unter einer Picosekunde liegt.

23. Verfahren nach einem der Ansprüche 16 - 22, **dadurch gekennzeichnet, dass** die Binderschicht (5,15) temporär aufgeschmolzen wird.

24. Verfahren nach einem der Ansprüche 16 - 23, **dadurch gekennzeichnet, dass** die auf den retroreflektierenden Körper gerichtete Strahlung fokussiert ist.

25. Verfahren nach Anspruch 24, **dadurch gekennzeichnet, dass** der Fokus oberhalb oder unterhalb der Binderschicht (5,15) liegt.

26. Verfahren nach Anspruch 25, **dadurch gekennzeichnet, dass** ein Fokus der Strahlung zumindest 10 Millimeter, bevorzugt zumindest 20 Millimeter und besonders bevorzugt zumindest 30 Millimeter von der Binderschicht (5,15) beabstandet ist.

27. Verfahren nach einem der Ansprüche 16 - 26, **dadurch gekennzeichnet, dass** der erste Teilbereich (I) mittels eines Strahlungsbündels abgerastert wird.

28. Verfahren gemäß einem der Ansprüche 16 - 27, **dadurch gekennzeichnet, dass** der retroreflektierende Körper (1,10) mittels einer Schablone abgedeckt wird, die den ersten Teilbereich (I) freilässt.

29. Verfahren gemäß einem der Ansprüche 16 - 28, **dadurch gekennzeichnet, dass** die auf den retroreflektierenden Körper (1,10) einfallende Strahlung den gesamten ersten Teilbereich (I) erfasst.

30. Verwendung eines retroreflektierenden Körpers (1,10) nach einem der Ansprüche 1 bis 15 als KFZ-Kennzeichenschild und/oder Verkehrsschild.

31. Verfahren zur Herstellung eines KFZ-Kennzeichenschildes und/oder eines Verkehrsschildes umfassend den Schritt, dass eine Folie nach Anspruch 14 auf einen Schildrohling aufkaschiert wird.

## Claims

1. A retro-reflective body (1, 10) with an optically perceptible feature, comprising a substrate (3, 13) on whose upper side (4) a binder layer (5, 15) is disposed, wherein a plurality of transparent elements (9, 19) is at least partially embedded into the binder layer (5, 15) in such a way that light can enter the transparent elements (9, 19), wherein the surface of the transparent elements (9, 19) is configured as a spherical segment at least in some portions and wherein the spherical segments of the transparent elements (9, 19) are embedded into the binder layer (5, 15) and are orientated towards the upper side (4) of the substrate (3, 13),
the retro-reffective body (1, 10) has a first partial region (I) in which a first share of the transparent elements (9, 19), in each case with the spherical sections, is adjacent to gas-filled or vacuum-filled spaces (8, 18) at least in some portions, and the spaces (8, 18) are formed between the transparent elements (9, 19) and the binder layer (5,15), wherein the optically perceptible feature is formed by the first partial region (I),
**characterized in that**
the spaces (8, 18) are in each case configured as a gap.

2. The retro-reflective body (1, 10) according to claim 1, wherein the first share is 10 to 90 %.

3. The retro-reflective body (1, 10) according to claim 1, wherein the first share is 10 to 50%.

4. The retro-reflective body (1, 10) according to claim 1, wherein the first share is 20 to 30 %.

5. The retro-reflective body (1, 10) according to any one of the preceding claims, comprising a second partial region (II) in which a second share of the transparent elements (9, 19), at the spherical segments, is adjacent at least in some portions to a space (8, 18) filled with an optically thinner medium or a vacuum, wherein the second share is at most 50% of the first share, preferably at most 30% and particularly preferably at most 15%.

6. The retro-reflective body (1, 10) according to any one of the preceding claims, **characterized in that** a reflective layer (7, 17), to which the binder layer (5, 15) is adjacent, is disposed on the upper side (4) of the substrate (3, 13), wherein the binder layer (5, 15) is configured to be substantially transparent.

7. The retro-reflective body (1, 10) according to claim 6, **characterized in that** the reflective layer (7, 17) has a thin metallic layer, preferably consisting of aluminum or silver.

8. The retro-reflective body (1, 10) according to any one of the preceding claims, wherein the transparent elements (9, 19) are configured for light refraction, so that light entering the transparent elements (9, 19) obliquely undergoes spectral decomposition.

9. The retro-reflective body (1, 10) according to any one of the preceding claims, **characterized in that** the transparent elements (9, 19) are arranged next to one another substantially in a plane parallel to the upper side (4) of the substrate (3, 13).

10. The retro-reflective body (1, 10) according to any one of the preceding claims, **characterized in that** the transparent elements (9, 19) are substantially configured as spheres.

11. The retro-reflective body (1, 10) according to any one of the preceding claims, **characterized in that** the optically perceptible feature is configured as a character and/or as an emblem and/or as a digit and/or as a pattern.

12. The retro-reflective body (1, 10) according to any one of the preceding claims, **characterized in that** the transparent elements (9, 19) have dimensions in the range from 25 to 100 µm, in particular in the range from 45 to 55 µm.

13. The retro-reflective body (1, 10) according to any one of the preceding claims, **characterized in that** the binder layer (5, 15) has a thickness in the range from 60 to 250 µm, in particular in the range from 60 to 120 µm.

14. The retro-reflective body (1, 10) according to any one of the preceding claims, **characterized in that** the retro-reflective body (1, 10) is configured as a film.

15. The retro-reflective body (1, 10) according to claims 1 to 16, **characterized in that** the retro-reflective body (1, 10) is configured as a traffic sign or vehicle number plate.

16. A method for producing a retro-reflective body (1, 10) with an optically perceptible feature, comprising at least the following steps:
a. providing a substrate (3, 13) on whose upper side (4) a binder layer (5, 15) is disposed, wherein a plurality of transparent elements (9, 19) is at least partially embedded into the binder layer (5, 15) in such a way that light can enter the transparent elements (9, 19), wherein the surface of the transparent elements (9, 19) is configured as a spherical segment at least in some portions and wherein the spherical segments of the transparent elements (9, 19) are embedded into the binder layer and are orientated towards the upper side (4) of the substrate (3, 13),
b. application of a laser radiation to a first partial region (I) of the retro-reflective body (1, 10),
**characterized in that**
the laser radiation is applied in such a way that, in the first partial region (I), gas-filled or vacuum-filled spaces (8, 18) are formed at least partially between the binder layer (5, 15) and the spherical segments in a first share of the transparent elements (9, 19), whereby the optically perceptible feature is formed by the first partial region (I), and that the spaces (8, 18) are in each case formed as a gap between the transparent elements (9, 19) and the binder layer (5, 15).

17. The method according to claim 16, **characterized in that** the first share is 10 to 90%.

18. The method according to claim 16, **characterized in that** the first share is 10 to 50%.

19. The method according to claim 16, **characterized in that** the first share is 20 to 30%.

20. The method according to any one of the claims 16 - 19, **characterized in that** the substrate (3, 13) has a second region (II) in which spaces (8, 18) filled with an optically thinner medium or with a vacuum are formed at least partially between the binder layer (5, 15) and the spherical segments in a second share of the transparent elements (9, 19), and wherein the second share is at most 50% of the first share, preferably at most 30% and particularly preferably at most 15%.

21. The method according to any one of the claims 16 - 20, **characterized in that** the wavelength of the laser radiation is preferably in the visible, near infrared or near ultraviolet range.

22. The method according to any one of the claims 16 - 21, **characterized in that** the laser radiation is pulsed, wherein a pulse duration is preferably in the range of a few hundred picoseconds, particularly preferably in the range of less than one hundred picoseconds, and particularly preferably less than one picosecond.

23. The method according to any one of the claims 16 - 22, **characterized in that** the binder layer (5, 15) is melted temporarily.

24. The method according to any one of the claims 16 - 23, **characterized in that** the radiation directed onto the retro-reflective body is focused.

25. The method according to claim 24, **characterized in that** the focus is located above or below the binder layer (5, 15).

26. The method according to claim 25, **characterized in that** a focus of the radiation is spaced apart from the binder layer (5, 15) by at least 10 millimeters, preferably at least 20 millimeters, and particularly preferably at least 30 millimeters.

27. The method according to any one of the claims 16 - 26, **characterized in that** the first partial region (I) is scanned by means of a radiation beam.

28. The method according to any one of the claims 16 - 27, **characterized in that** the retro-reflective body (1, 10) is covered by means of a template that leaves the first partial region (I) exposed.

29. The method according to any one of the claims 16 - 28, **characterized in that** the radiation incident on the retro-reflective body (1, 10) covers the entire first partial region (I).

30. A use of a retro-reflective body (1, 10) according to any one of the claims 1 to 15 as a vehicle number plate and/or traffic sign.

31. A method for producing a vehicle number plate and/or traffic sign, comprising the step of a film according to claim 14 being laminated onto a panel blank.

## Revendications

1. Corps rétroréfléchissant (1, 10) ayant une caractéristique perceptible optiquement, comprenant un support (3, 13) sur la face supérieure (4) duquel est disposée une couche de liant (5, 15), dans ladite couche de liant (5, 15) étant incorporée au moins en partie une pluralité d'éléments transparents (9, 19) de manière à ce que de la lumière puisse entrer dans les éléments transparents (9, 19), dans lequel la surface des éléments transparents (9, 19) est réalisée au moins par zones en tant que section sphérique, et dans lequel les sections sphériques des éléments transparents (9, 19) sont enrobées dans la couche de liant (5, 15) et sont orientées vers la face supérieure (4) du support (3, 13),
le corps rétroréfléchissant (1, 10) présente une première zone partielle (I) dans laquelle une première part des éléments transparents (9, 19) est contiguë, respectivement par les sections sphériques, au moins par zones à des espaces (8, 18) remplis de gaz ou remplis de vide, et lesdits espaces (8, 18) sont réalisés entre les éléments transparents (9, 19) et la couche de liant (5, 15), la caractéristique perceptible optiquement étant formée par la première zone partielle (1),
**caractérisé par le fait que**
les espaces (8, 18) sont réalisés chacun en tant que fente.

2. Corps rétroréfléchissant (1, 10) selon la revendication 1, dans lequel la première part est comprise entre 10 et 90 %.

3. Corps rétroréfléchissant (1, 10) selon la revendication 1, dans lequel la première part est comprise entre 10 et 50 %.

4. Corps rétroréfléchissant (1, 10) selon la revendication 1, dans lequel la première part est comprise entre 20 et 30 %.

5. Corps rétroréfléchissant (1, 10) selon l'une quelconque des revendications précédentes, comprenant une deuxième zone partielle (II) dans laquelle une deuxième part des éléments transparents (9, 19) est contiguë, sur les sections sphériques, au moins par zones à un espace (8, 18) rempli d'un milieu optiquement plus liquide ou rempli de vide, dans lequel la deuxième part fait 50 % au maximum de la première part, de préférence 30 % au maximum et de manière particulièrement préférée 15 % au maximum.

6. Corps rétroréfléchissant (1, 10) selon l'une quelconque des revendications précédentes, **caractérisé par le fait que** sur la face supérieure (4) du support (3, 13) est disposée une couche réfléchissante (7, 17) à laquelle est contiguë la couche de liant (5, 15), et dans lequel la couche de liant (5, 15) est conçue de manière à être pour l'essentiel transparente.

7. Corps rétroréfléchissant (1, 10) selon la revendication 6, **caractérisé par le fait que** la couche réfléchissante (7, 17) présente une mince couche métallique, de préférence en aluminium ou en argent.

8. Corps rétroréfléchissant (1, 10) selon l'une quelconque des revendications précédentes, dans lequel les éléments transparents (9, 19) sont agencés pour la réfraction de sorte que de la lumière entrant de manière oblique dans les éléments transparents (9, 19) subit une décomposition spectrale.

9. Corps rétroréfléchissant (1, 10) selon l'une quelconque des revendications précédentes, **caractérisé par le fait que** les éléments transparents (9, 19) sont disposés les uns à côté des autres pour l'essentiel dans un plan parallèle à la face supérieure (4) du support (3, 13).

10. Corps rétroréfléchissant (1, 10) selon l'une quelconque des revendications précédentes, **caractérisé par le fait que** les éléments transparents (9, 19) sont conçus pour l'essentiel en tant que billes.

11. Corps rétroréfléchissant (1, 10) selon l'une quelconque des revendications précédentes, **caractérisé par le fait que** la caractéristique perceptible optiquement est réalisée sous la forme d'un caractère et/ou sous la forme d'un emblème et/ou sous la forme d'un nombre et/ou d'un motif.

12. Corps rétroréfléchissant (1, 10) selon l'une quelconque des revendications précédentes, **caractérisé par le fait que** les éléments transparents (9, 19) présentent des dimensions comprises entre 25 et 100 µm, en particulier entre 45 et 55 µm.

13. Corps rétroréfléchissant (1, 10) selon l'une quelconque des revendications précédentes, **caractérisé par le fait que** la couche de liant (5, 15) présente une épaisseur comprise entre 60 et 250 µm, en particulier entre 60 et 120 µm.

14. Corps rétroréfléchissant (1, 10) selon l'une quelconque des revendications précédentes, **caractérisé par le fait que** le corps rétroréfléchissant (1, 10) est réalisé sous la forme d'un film.

15. Corps rétroréfléchissant (1, 10) selon l'une quelconque des revendications 1 à 16, **caractérisé par le fait que** le corps rétroréfléchissant (1, 10) est conçu en tant que panneau de signalisation routière ou comme plaque d'immatriculation.

16. Procédé de fabrication d'un corps rétroréfléchissant (1, 10) présentant une caractéristique perceptible optiquement, comprenant au moins les étapes suivantes consistant à:
a. fournir un support (3, 13) sur la face supérieure (4) duquel est disposée une couche de liant (5, 15), dans ladite couche de liant (5, 15) étant enrobée au moins en partie une pluralité d'éléments transparents (9, 19) de manière à ce que de la lumière puisse entrer dans les éléments transparents (9, 19), dans lequel la surface des éléments transparents (9, 19) est réalisée au moins par zones en tant que section sphérique, et dans lequel les sections sphériques des éléments transparents (9, 19) sont enrobées dans la couche de liant et sont orientées vers la face supérieure (4) du support (3, 13),
b. appliquer un rayonnement laser à une première zone partielle (I) du corps rétroréfléchissant (1, 10),
**caractérisé par le fait que**
le rayonnement laser est appliqué de telle sorte que dans ladite première zone partielle (I), dans une première part des éléments transparents (9, 19), des espaces (8, 18) se forment au moins en partie entre la couche de liant (5, 15) et les sections sphériques, qui sont remplis d'un gaz ou de vide ce par quoi la caractéristique perceptible optiquement est formée par la première zone partielle (I), et que lesdits espaces (8, 18) se forment chacun en tant que fente entre les éléments transparents (9, 19) et la couche de liant (5, 15).

17. Procédé selon la revendication 16, **caractérisé par le fait que** la première part est comprise entre 10 et 90 %.

18. Procédé selon la revendication 16, **caractérisé par le fait que** la première part est comprise entre 10 et 50 %.

19. Procédé selon la revendication 16, **caractérisé par le fait que** la première part est comprise entre 20 et 30 %.

20. Procédé selon l'une quelconque des revendications 16 à 19, **caractérisé par le fait que** le support (3, 13) présente une deuxième zone (II) dans laquelle, dans une deuxième part des éléments transparents (9, 19), des espaces (8, 18) se forment au moins en partie entre la couche de liant (5, 15) et les sections sphériques, qui sont remplis d'un milieu optiquement plus liquide ou remplis de vide, et dans lequel la deuxième part fait 50 % au maximum de la première part, de préférence 30 % au maximum et de manière particulièrement préférée 15 % au maximum.

21. Procédé selon l'une quelconque des revendications 16 à 20, **caractérisé par le fait que** la longueur d'onde du rayonnement laser se situe de préférence dans le visible, dans le proche infrarouge ou dans l'ultraviolet proche.

22. Procédé selon l'une quelconque des revendications 16 à 21, **caractérisé par le fait que** le rayonnement laser est pulsé, dans lequel une durée d'impulsion se situe de préférence dans la plage de quelques centaines de picosecondes, de manière particulièrement préférée dans la plage inférieure à cent picosecondes et est, en particulier, de préférence, inférieure à une picoseconde.

23. Procédé selon l'une quelconque des revendications 16 à 22, **caractérisé par le fait que** la couche de liant (5, 15) est fondue temporairement.

24. Procédé selon l'une quelconque des revendications 16 à 23, **caractérisé par le fait que** le rayonnement dirigé sur le corps rétroréfléchissant est focalisé.

25. Procédé selon la revendication 24, **caractérisé par le fait que** le foyer est situé au-dessus ou au-dessous de la couche de liant (5, 15).

26. Procédé selon la revendication 25, **caractérisé par le fait qu'**un foyer du rayonnement est espacé d'au moins 10 millimètres, de préférence d'au moins 20 millimètres et de manière particulièrement préférée d'au moins 30 millimètres de la couche de liant (5, 15).

27. Procédé selon l'une quelconque des revendications 16 à 26, **caractérisé par le fait que** la première zone partielle (I) est balayée au moyen d'un faisceau de rayonnement.

28. Procédé selon l'une quelconque des revendications 16 à 27, **caractérisé par le fait que** le corps rétroréfléchissant (1, 10) est recouvert au moyen d'un gabarit laissant libre la première zone partielle (I).

29. Procédé selon l'une quelconque des revendications 16 à 28, **caractérisé par le fait que** le rayonnement incident sur le corps rétroréfléchissant (1, 10) couvre l'ensemble de la première zone partielle (I).

30. Utilisation d'un corps rétroréfléchissant (1, 10) selon l'une quelconque des revendications 1 à 15, en tant que plaque d'immatriculation et/ou panneau de signalisation routière.

31. Procédé de fabrication d'une plaque d'immatriculation et/ou d'un panneau de signalisation routière, comprenant l'étape consistant à stratifier un film selon la revendication 14 sur une ébauche de plaque ou bien de panneau.
